# EUROPEAN PATENT APPLICATION

(11) **EP 4 465 188 A1**
(43) Date of publication of application: **20.11.2024**
(21) Application number: 24176788.8
(22) Date of filing: 17.05.2024
(51) Int. Cl.: G06F 16/25

(54) **FLEXIBLE EXTRACT, TRANSFORM, AND LOAD (ETL) PROCESS**

(30) Priority: 19.05.2023 US 202363503399 P
(71) Applicant: Thermo Electron North America LLC, West Palm Beach, FL 33407 (US); Thermo Finnigan LLC, San Jose, CA 95134 (US); High Chem S.R.O., 82109 Ruzinov District, Bratislava (SK)
(72) Inventor: RESSLER, Mark, Bannockburn, 60015 (US); DESHPANDE, Sachin, San Jose, 95134 (US); KUMP, Matthew, San Jose, 95134 (US); HUMENIK, Drahoslav, 82109 Bratislava (SK); KONOPKA, Martin, 82109 Bratislava (SK)
(74) Representative: Boult Wade Tennant LLP

(57) **Abstract**

Disclosed herein are systems, methods, computing devices, and computer-readable media. For example, in some embodiments, a method for extract, transform and load (ETL) processing executed by a processing device, the method comprising: receiving, from a data catalog, field mapping between application data and a target schema; receiving from an ETL processing queue, signal comprising metadata and indicating that a record or a data file related to the application data is ready for processing; determining source data by processing the metadata to identify a location of the record or the data file and retrieving the record or the data file from the identified location; and providing source data to a table defined according to the target schema.

## Description

### Field

According to more recent thinking in data analytics, the need to transform data in a Big Data store is greatly reduced, following extract, transform, and load (ETL) practices. Generally, ETL is a data integration process that combines data from multiple data sources into a single, consistent data store that is loaded into a data warehouse or other target system. ETL processes provide the foundation for data analytics and machine learning workstreams. Through a series of logical rules, ETL processes cleanse and organize data in a way that not only addresses specific intelligence needs, but also tackles more advanced analytics, which can improve back-end processes or end-user experiences.

### Summary

Disclosed herein are systems, as well as related methods, computing devices, and computer-readable media. For example, in some embodiments, a method for ETL processing executed by a processing device comprises receiving, from a data catalog, field mapping between application data and a target schema; receiving from an ETL processing queue, a signal comprising metadata and indicating that a record or a data file related to the application data is ready for processing; determining source data by processing the metadata to identify a location of the record or the data file and retrieving the record or the data file from the identified location; and providing source data to a Big Data table defined according to the target schema.

### Brief Description of the Drawings

Embodiments will be readily understood by the following detailed description in conjunction with the accompanying drawings. To facilitate this description, like reference numerals designate like structural elements. Embodiments are illustrated by way of example, not by way of limitation, in the figures of the accompanying drawings.
FIG. 1 depicts an example container diagram, in accordance with various embodiments.
FIG. 2 is a block diagram of an example support module for a flexible ETL processing, in accordance with various embodiments.
FIG. 3 is a flow diagram of an example method to provide a flexible ETL process, in accordance with various embodiments.
FIG. 4 is an example of a graphical user interface that may be used in the performance of some, or all of the support methods disclosed herein, in accordance with various embodiments.
FIG. 5 is a block diagram of an example computing device that may perform some or all of the support methods disclosed herein, in accordance with various embodiments.

### Detailed Description

Data analytics typically require significant custom modelling to support specific use cases. Even in data warehousing where online analytical processing (OLAP) structures are created to support a wide range of use cases, the modeling of those structures and the population of the data in ETL pipelines requires specific knowledge of data sources and custom modelling of fact and dimension tables to provide that range of applicability. Moreover, when a platform team takes responsibility for this custom modelling and specialized pipeline development, the team may be trapped in an endless cycle of custom development, complicating platform deployment, and potentially compromising platform adoption.

Additionally, moving data into a Big Data store often requires custom coding and scheduling of ETL jobs. Likewise, tracking data lineage in a data catalog requires linking the data catalog to data connectors and/or ETL tools to retrieve the data mappings; otherwise, manual curation of data lineage may be required. These techniques are typically employed when managing a traditional enterprise Big Data store. However, managing Big Data on a data platform by applying these enterprise data techniques is not particularly efficient or manageable. In some embodiments, the techniques described herein solve these problems by reversing the order of operations in traditional enterprise data techniques. For example, in some embodiments, the data lineage is configured into the data catalog first, thereby defining the data movement that the ETL process will implement. This allows ETL jobs to be defined in a flexible manner that may be broadly applicable and/or scaled across a variety of data sources, data types, and/or target systems. Thus, the flexible ETL processes described herein may reduce the amount of custom coding required. Moreover, because the data lineage is defined initially in the data catalog, curation of these data relationships may remain to be accurate and current.

Accordingly, the described systems and methods provide flexible ETL processes that employ the data lineage capabilities of a data catalog. Generally, the employed data lineage defines a data mapping required by an ETL process and tracks how data is moved from data sources such as files or operational databases into, for example, Big Data tables. In some embodiments, the flexible ETL process uses metadata concerning data sources and targets from a data catalog to move incoming data from source to target without custom coding. Implementation of the flexible ETL process decreases the level of effort required to ingest new data sources for analytical and reporting purposes. Implementation of the flexible ETL process also speeds up integration with new data sources, reduces the amount of code to maintain, and/or automatically aligns with a new data catalog. Furthermore, implementation of the generic ETL reduce latency and memory requirements and increase optimization for operational databases.

In some embodiments, the described flexible ETL process is employed to address the need to provide the capability to query data across a large number of separate data files without having to read each file individually in a batch process, to join data from different sources together in an efficient manner, and to provide capabilities to visualize that data in dashboards to address use cases not necessarily dependent on specific applications.

Implementation of the flexible ETL processes described herein improve many traditional Information Technology areas such as ETL, Data Lake, Lakeshore Mart, and Business Intelligence - all typical components of Enterprise Computing. Deploying these technologies becomes challenging on platforms that utilize multiple deployment models and lack dedicated support staff for immediate response to alert, as may be common in an Enterprise environment. Additionally, scaling these deployments to improve performance can also be difficult, unlike in Enterprise deployments where adding additional commodity hardware to clusters as needed may be relatively straightforward. Consequently, the flexible ETL processes and the associated architectures described herein maximize performance using minimal resources, while greatly reducing and/or eliminating the need for regular support to maintain data consistency and/or availability.

The need to track data movement from source files to queryable tables coincides with the need to describe the data within the platform in the form of a Data Catalog. To address these and other technical problems, the flexible ETL processes maintaining mappings between source data files and target tables, which allows them to indicate how the data transfer into the Big Data Store should be executed. Furthermore, the flexible ETL processes provide provenance information for data movement within the platform. Moreover, the representation of document types, associated schemas, and data fields in the Data Catalog is accompanied by semantic information defining the meaning of that data, which enables the interoperability of data within and outside of the platform.

### Certain Definitions

In the following detailed description, reference is made to the accompanying drawings that form a part hereof wherein like numerals designate like parts throughout, and in which is shown, by way of illustration, embodiments that may be practiced. It is to be understood that other embodiments may be utilized, and structural or logical changes may be made, without departing from the scope of the present disclosure. Therefore, the following detailed description is not to be taken in a limiting sense.

Various operations may be described as multiple discrete actions or operations in turn, in a manner that is most helpful in understanding the subject matter disclosed herein. However, the order of description should not be construed as to imply that these operations are necessarily order dependent. In particular, these operations may not be performed in the order of presentation. Operations described may be performed in a different order from the described embodiment. Various additional operations may be performed, and/or described operations may be omitted in additional embodiments.

For the purposes of the present disclosure, the phrases "A and/or B" and "A or B" mean (A), (B), or (A and B). For the purposes of the present disclosure, the phrases "A, B, and/or C" and "A, B, or C" mean (A), (B), (C), (A and B), (A and C), (B and C), or (A, B, and C). Although some elements may be referred to in the singular (e.g., "a processing device"), any appropriate elements may be represented by multiple instances of that element, and vice versa. For example, a set of operations described as performed by a processing device may be implemented with different ones of the operations performed by different processing devices.

The description uses the phrases "an embodiment," "various embodiments," and "some embodiments," each of which may refer to one or more of the same or different embodiments. Furthermore, the terms "comprising," "including," "having," and the like, as used with respect to embodiments of the present disclosure, are synonymous. When used to describe a range of dimensions, the phrase "between X and Y" represents a range that includes X and Y. As used herein, an "apparatus" may refer to any individual device, collection of devices, part of a device, or collections of parts of devices. The drawings are not necessarily to scale.

As used herein, the term "data catalog" includes but is not limited to, for example, a collection of metadata related to file types for documents managed by a document service and other services, including semantic definitions.

As used herein, the term "ontology" includes but is not limited to, for example, a set of entities and relationships between entities, including classes of entities, across well-defined properties.

As used herein, the term "knowledge graph" includes but is not limited to, for example, a collection of descriptions of entities linked by meaningful relationships, typically stored in a graph database aligned to an ontology.

As used herein, the terms "triplestore" or "semantic triplestore" include but are not limited to, for example, a no structured query language (NoSQL) database storing data primarily in the form of triples representing a subject, a predicate, and an object, typically providing query capabilities using the SPARQL protocol. Also known as a "graph database."

As used herein, the term "data catalog service" includes but is not limited to, for example, a service managing metadata related to datasets such as files stored in a document repository or tables in a database, including semantic definitions. A data catalog service may store metadata concerning how data should be moved into, for example, a Big Data store or a relational database server.

As used herein, the term "search index" includes but is not limited to, for example, a service optimizing the storage of metadata for rapid identification of entities based on search criteria, such as full-text search.

As used herein, the term "ETL tool" includes but is not limited to, for example, software designed to extract, transform, and load data.

As used herein, the term "ETL processing queue" includes but is not limited to, for example, a channel in a message broker such as Kafka or RabbitMQ containing references to documents or data sets that need to be processed within an ETL pipeline.

As used herein, the terms "database server" or "relational database server" include but are not limited to, for example, a system storing and optimizing tabular data for rapid querying using a defined query language.

As used herein, the term "Big Data store" includes but is not limited to, for example, a data repository for storing large numbers of files for analysis, typically in the original data formats, but also possibly in optimized big data file formats such as ORC or Parquet. In various implementations, "Big Data store" may also be referred to as "Data Lake." In some embodiments, a large number of files is on the order of one million or more files.

### Example Flexible ETL Process

In an example embodiment, the flexible ETL process can be outlined as follows. An application registers data schemas for its source data, schemas for target Big Data tables, and/or field mappings between these source and target schemas to a Data Catalog. Generally, a field mapping describes how a persistent field (e.g., from the above sources) maps to the target schemas. The ETL process reads these field mappings from the Data Catalog and creates the defined target Big Data tables (e.g., when they do not already exist) based on the field mappings. When a new source data file or record is available, the application registers it with the Data Catalog. The Data Catalog aligns the new data file or the record with the appropriate schema (e.g., when configured). When the new data file or record is associated with a schema that has been mapped to a Big Data table, the Data Catalog inserts a record into an ETL processing queue. When the new data file or record is not associated with a schema that has been mapped to a Big Data table, the Data Catalog registers the availability of the new data. The ETL tool reads records from the ETL processing queue, including information concerning how data should be mapped to Big Data tables. The ETL tool processes the incoming data into records and forwards the records to the appropriate Big Data tables.

Example categories of source data where the flexible ETL process be employed include data in standard file formats like CSV, JSON, and XML that can easily be parsed, data captured from relational databases in the form of individual records, data in standard scientific file formats like SPC or GAML for which data parsers are readily available, and the like. In various implementations, the source data includes database files. For example, the source data may include relational database files, such as MySQL files, PostgreSQL files, Microsoft SQL Server files, Oracle database files, SQLite files, etc. In some examples, the database files are scientific instrument result files. For example, the result files may include Proteome Discoverer result files and/or Compound Discoverer^{™} result files.

Thus, the flexible ETL process improves computing technologies by automating the mapping and/or importing of different source data (e.g., source data having different file formats, different data structures, different schemas, etc.) to a same target schema (e.g., the schema of a target database, a target data table in a Big Data store) or to different target schemas (e.g., the schema of different target database or different target data tables in the same Big Data store, etc.). By automating the mapping process between data fields of different source data and the target schemas, the flexible ETL process reduces or eliminates the errors that can be caused by labor-intensive manual mapping processes, improving the overall reliability and speed of importing large quantities of diverse source data to a target data table, database, etc.

For example, diverse source data may use different formats (e.g., CSV, JSON, XML, etc.) and/or have different structures (e.g., hierarchical, relational, or flat). The flexible ETL process systematically and automatically maps fields of the diverse data sources to the target schemas, ensuring that different source data having different formats can be integrated smoothly into the target schemas. Furthermore, as the diversity of the source data increases, manually mapping each type of source data to the target schema can become unsustainable. Because the automated mapping performed by the flexible ETL process can handle a diverse range of source data types, the flexible ETL process scales efficiently, handling increased volumes and types of source data without a corresponding increase in error rates.

### System Context

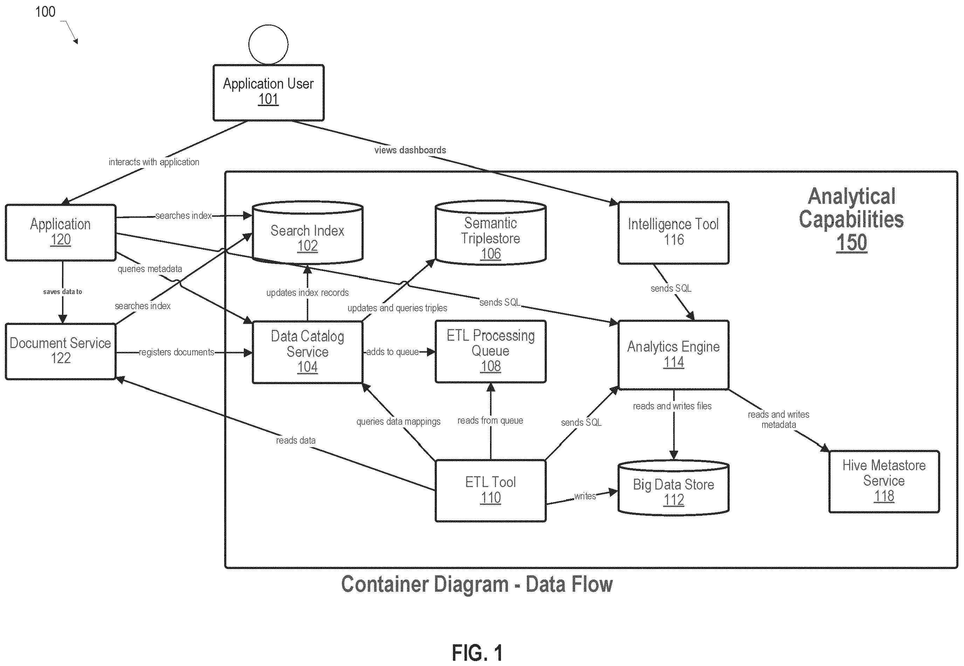

In some embodiments, the flexible ETL process is provided via a platform encompassing both operational capabilities as well as the analytical capabilities described here. Operational capabilities include, for example, a document service (see FIG. 1). In some embodiments, the provided analytical capabilities support multiple document repositories provided via a number of various platforms.

In some embodiments, an application stores data to the platform via the document service. In some embodiments, the analytical capabilities pull some of the data from the document service into separate storage optimized for Big Data queries, providing a default intelligence tool that allows for the presentation of the data onto dashboards for a user of the application to view. In some embodiments, some applications may query data within the optimized analytical capabilities to fulfill certain application use cases. In some embodiments, there are a number of different paths by which data may be ingested or accessed for analytical purposes: (1) document data flow, (2) record data flow, and (3) virtual data flow. These are described separately in sections below.

### Document Data Flow

FIG. 1 depicts an example container diagram 100 that shows which elements of the analytical capabilities 150 interact with a platform and its applications (not shown). In some embodiments, a document service 122 is responsible for registering documents and other data sets located within the platform into the data catalog service 104, including an access URL through which the actual documents can be retrieved. In some embodiments, multiple data repositories within or outside of the platform register documents into the data catalog service 104. Other services may also register metadata with the data catalog service 104, for example, by linking metadata either to datasets or to entities related to datasets, such as injections or sequences. As depicted, the primary data storage for the data catalog service 104 may be a semantic triplestore 106. In various implementations, the semantic triplestore 106 includes a web-based semantic triplestore, such as an Apache Jena RDF triplestore hosted by an Apache Jena Fuseki server. In some examples, the semantic triplestore 106 includes a web-based triplestore implemented using the Eclipse RDF4J framework. However, other database implementations may be employed according to the specifics of the project.

In some embodiments, the search index 102 provides rapid search capabilities across indexed data sets in the data catalog (e.g., by keyword or search string where the key of the search index data is the identifier of the entity within the semantic triplestore 106). In some embodiments, the search index 102 is exposed to the platform or application 120 on that platform to perform searches against the metadata in the data catalog, the results of which can be sent to the data catalog service 104 to pull associated metadata.

In some embodiments, the data catalog service 104 provides a signal to the downstream data pipeline that new or updated documents are ready to be processed. For example, the data catalog service 104 sends a message to the ETL processing queue 108 where the ETL tool 110 can retrieve it. In some embodiments, the ETL tool 110 (e.g., Apache NiFi) introduces documents into its pipeline by instantiating a listener via, for example, FTP, HTTP, or GRPC.

In some embodiments, the ETL tool 110 ensures that documents are more reliably queued for processing via an independent queue, which decouples the data catalog service 104 from the ETL tool 110. In some embodiments, the ETL Tool 110 processes source documents from one of the following categories: documents in general file formats such as CSV, JSON, or XML, documents in standard analytic file formats such as SPC, GAML, or Allotrope ADF, or documents or data sets in specialized formats. In some embodiments, the first two categories are managed by generic ETL pipelines, so long as the schema definitions for the source files and the target tables are defined in the data catalog. In some embodiments, the third category is managed by specialized ETL pipelines for each specialized format to be processed.

In some embodiments, the ETL tool 110 retrieves a message from the ETL processing queue 108 indicating that a new document needs to be processed. In some embodiments, the message includes information about the document's media type, which defines what kind of document it is thus dictates how the document is processed within the ETL pipeline. In some embodiments, for documents that can be handled through a generic ETL pipeline, the ETL tool 110 retrieves schema mapping information from the data catalog service 104 and directs the document to the appropriate path in the pipeline, or to a specialized path in the pipeline when the document is in one of the specialized formats. In some embodiments, the ETL tool 110 saves data to the Big Data store 112.

### Record Data Flow

The above description of the relationships between containers in FIG. 1 is focused on document-based data (e.g., documents and files) ingestion; however, the same architecture can support data ingestion based on records, such as change-data-capture records from a relational database. Besides metadata, other services that track data changes outside of files can also send records through the data catalog service 104, where, in some embodiments, those records would not be processed to the semantic triplestore 106 but would be passed to the ETL processing queue 108 as records to be processed by the ETL Tool 110 and stored to the Big Data store 112. Consequently, the example architecture depicted in FIG. 1 can support additional use cases whereby operational data other than documents or files can be transferred to the analytical capabilities 150 to support analytical or artificial-intelligence (Al)/machine learning (ML) use cases in situations where those patterns of queries need to be offloaded from their source databases, for example, to ensure that they do not interfere with operational functionality.

### Virtual Data Flow

The architecture depicted in FIG. 1 may also be employed to support a virtual data flow model, which also employs an analytics engine 114 (e.g., Trino^{®}) and relational data stores, such as Application Databases, to perform heterogeneous joins between the relational stores and the data in the Big Data store 112. In some embodiments, the analytics engine 114 is designed to reduce or eliminate the need to move data from the relational stores in order to perform certain analytic queries. In such embodiments, the configuration of the connections from the analytics engine 114 to the relational data stores is performed on deployment of the analytical capabilities 150. In some embodiments, services provided by the platform register definitions of the relational data stores with the data catalog service 104 to ensure that data semantics extend to queryable (by the analytics engine 114) elements. In some embodiments, applications 120 are employed that provide visualizations (e.g., charts) against data in the Big Data store 112; however, for certain use cases, applications 120 may also be configured to query the analytics engine 114 directly.

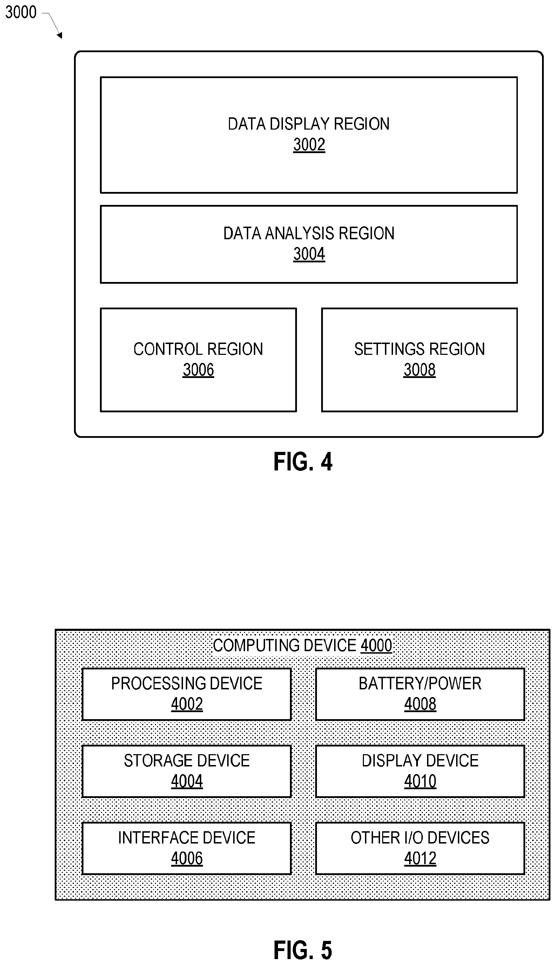

Many of the applications 120 described above represent software packages that are installed and configured (e.g., on the computing device 4000 of FIG. 5). For example, in some embodiments, the analytics engine 114 is configured with the connection to the Big Data store 112 and to a meta-store service 118 (e.g., Hive^{®}), whereas an intelligence tool 116 is configured with a connection to the analytics engine 114 to provide design of charts and dashboards (e.g., via the display device 4010 discussed herein with reference to FIG. 5) to the application user 101. In some embodiments, the ETL jobs within the ETL tool 110 take the form of configurations within the intelligence tool 116.

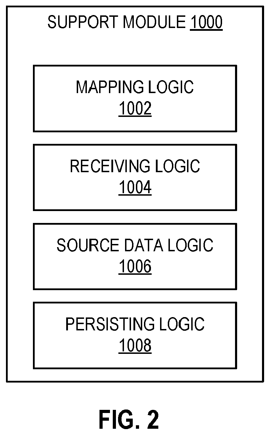

FIG. 2 is a block diagram of a support module 1000 for performing support operations, in accordance with various embodiments. The support module 1000 may be implemented by circuitry (e.g., including electrical and/or optical components), such as a programmed computing device. The logic of the support module 1000 may be included in a single computing device or may be distributed across multiple computing devices that are in communication with each other as appropriate. Examples of computing devices that may, singly or in combination, implement the support module 1000 are discussed herein with reference to the computing device 4000 of FIG. 5. In some embodiments, these computing devices are interconnected, and the support module 1000 may be implemented across one or more of the computing devices.

The support module 1000 may include mapping logic 1002, receiving logic 1004, source data logic 1006, and/or persisting logic 1008. As used herein, the term "logic" may include an apparatus that is to perform a set of operations associated with the logic. For example, any of the logic elements included in the support module 1000 may be implemented by one or more computing devices programmed with instructions to cause one or more processing devices of the computing devices to perform the associated set of operations. In a particular embodiment, a logic element may include one or more non-transitory computer-readable media having instructions thereon that, when executed by one or more processing devices of one or more computing devices, cause the one or more computing devices to perform the associated set of operations. As used herein, the term "module" may refer to a collection of one or more logic elements that, together, perform one or more functions associated with the module. Different ones of the logic elements in a module may take the same form or may take different forms. For example, some logic in a module may be implemented by a programmed general-purpose processing device, while other logic in a module may be implemented by an application-specific integrated circuit (ASIC). In another example, different ones of the logic elements in a module may be associated with different sets of instructions executed by one or more processing devices. A module may not include all of the logic elements depicted in the associated drawing; for example, a module may include a subset of the logic elements depicted in the associated drawing when that module is to perform a subset of the operations discussed herein with reference to that module.

The mapping logic 1002 may be configured to map fields between application data and a target schema deployed to a data catalog or data catalog service (e.g., the data catalog service 104 of FIG.1) In some embodiments, the field mapping is stored to the data catalog by an application or server configured to use the application data to register, when available, a new record or a new source data file with the data catalog. In some embodiments, the record or the data file was aligned with the target schema by the data catalog. In some embodiments, the mapping is defined according to a type of the application data.

The receiving logic 1004 may be configured to receive from an ETL processing queue (e.g., the ETL processing queue 108) a signal comprising metadata and indicating that a record or a data file related to the application data is ready for processing. In some embodiments, the signal is inserted into the ETL processing queue by the data catalog. In some embodiments, the signal is inserted by the data catalog based on a type of the record or the data file matching the type of the application data. In some embodiments, the signal includes a location of the record or the data file.

The source data logic 1006 may be configured to determine source data by processing the record or data file. The persisting logic 1008 may be configured to providing source data to a Big Data table defined according to the target schema. In some embodiments, the source data is provided to the Big Data table using metadata provided by the data catalog.

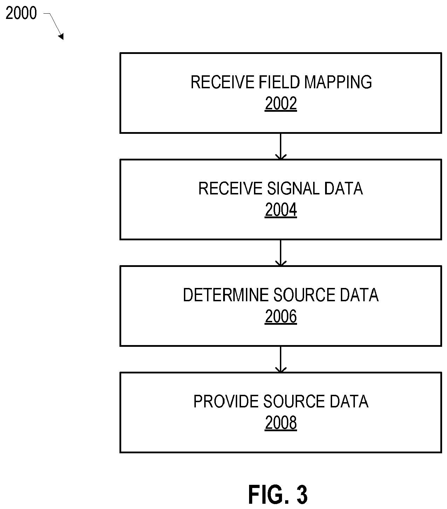

FIG. 3 depicts a flow diagram of a method 2000 of performing support operations, in accordance with various embodiments. Although the operations of the method 2000 may be illustrated with reference to particular embodiments disclosed herein (e.g., the analytical capabilities 150 discussed herein with reference to FIG. 1, the GUI 3000 discussed herein with reference to FIG. 4, and/or the computing device 4000 discussed herein with reference to FIG. 5), the method 2000 may be used in any suitable setting to perform any suitable support operations. Operations are illustrated once each and in a particular order in FIG. 2, but the operations may be reordered and/or repeated as desired and appropriate (e.g., different operations performed may be performed in parallel, as suitable).

For method 2000, at 2002, first operations may be performed. For example, the mapping logic 1002 of a support module 1000 may perform the operations of 2002. The first operations may include receiving, from a data catalog, field mapping between application data and a target schema.

At 2004, second operations may be performed. For example, receiving logic 1004 of a support module 1000 may perform the operations of 2004. The second operations may include receiving, from an ETL processing queue, a signal comprising metadata and indicating that a record or a data file related to the application data is ready for processing.

At 2006, third operations may be performed. For example, the source data logic 1006 of a support module 1000 may perform the operations of 2006. The third operations may include determining source data by processing the metadata to identify a location of the record or the data file and retrieving the record or the data file from the identified location.

At 2008, fourth operations may be performed. For example, the persisting logic 1008 of a support module 1000 may perform the operations of 2108. The fourth operations may include providing source data to a Big Data table defined according to the target schema.

The support methods disclosed herein may include interactions with a human user. These interactions may include providing information to the user or providing an option for a user to input commands (e.g., a configuration for a generic ETL or an application that provides record and data files that are processes by the generic ETL), queries (e.g., to a local or remote database), or other information. In some embodiments, these interactions may be performed through a graphical user interface (GUI) that includes a visual display on a display device (e.g., the display device 4010 discussed herein with reference to FIG. 5) that provides outputs to the user and/or prompts the user to provide inputs (e.g., via one or more input devices, such as a keyboard, mouse, trackpad, or touchscreen, included in the other I/O devices 4012 discussed herein with reference to FIG. 5). The support systems disclosed herein may include any suitable GUIs for interaction with a user.

FIG. 4 depicts an example GUI 3000 that may be used in the performance of some or all of the support methods disclosed herein, in accordance with various embodiments. As noted above, the GUI 3000 may be provided on a display device (e.g., the display device 4010 discussed herein with reference to FIG. 5) of a computing device, and a user may interact with the GUI 3000 using any suitable input device (e.g., any of the input devices included in the other I/O devices 4012 discussed herein with reference to FIG. 5) and input technique (e.g., movement of a cursor, motion capture, facial recognition, gesture detection, voice recognition, actuation of buttons, etc.).

The GUI 3000 may include a data display region 3002, a data analysis region 3004, a control region 3006, and a settings region 3008. The particular number and arrangement of regions depicted in FIG. 4 is simply illustrative, and any number and arrangement of regions, including any desired features, may be included in a GUI 3000. The data display region 3002 may display data.

The data analysis region 3004 may display the results of data analysis (e.g., the results of analyzing the data illustrated in the data display region 3002 and/or other data). For example, the data analysis region 3004 may display source data from an application that is stored within a Big Data table. In some embodiments, the data display region 3002 and the data analysis region 3004 may be combined in the GUI 3000.

The control region 3006 may include options that allow the user to control a flexible ETL implementation. The settings region 3008 may include options that allow the user to control the features and functions of the GUI 3000 (and/or other GUIs) and/or perform common computing operations with respect to the data display region 3002 and data analysis region 3004 (e.g., saving data on a storage device, such as the storage device 4004 discussed herein with reference to FIG. 5, sending data to another user, labeling data, etc.).

As noted above, the support module 1000 may be implemented by one or more computing devices. FIG. 5 is a block diagram of a computing device 4000 that may perform some or all of the support methods disclosed herein, in accordance with various embodiments. In some embodiments, the support module 1000 may be implemented by a single computing device 4000 or by multiple computing devices 4000.

The computing device 4000 of FIG. 5 is illustrated as having a number of components, but any one or more of these components may be omitted or duplicated, as suitable for the application and setting. In some embodiments, some or all of the components included in the computing device 4000 may be attached to one or more motherboards and enclosed in a housing (e.g., including plastic, metal, and/or other materials). In some embodiments, these components may be fabricated onto a single system-on-a-chip (SoC) (e.g., an SoC may include one or more processing devices 4002 and one or more storage devices 4004). Additionally, in various embodiments, the computing device 4000 may not include one or more of the components illustrated in FIG. 5, but may include interface circuitry (not shown) for coupling to the one or more components using any suitable interface (e.g., a Universal Serial Bus (USB) interface, a High-Definition Multimedia Interface (HDMI) interface, a Controller Area Network (CAN) interface, a Serial Peripheral Interface (SPI) interface, an Ethernet interface, a wireless interface, or any other appropriate interface) . For example, the computing device 4000 may not include a display device 4010, but may include display device interface circuitry (e.g., a connector and driver circuitry) to which a display device 4010 may be coupled.

The computing device 4000 may include a processing device 4002 (e.g., one or more processing devices). As used herein, the term "processing device" may refer to any device or portion of a device that processes electronic data from registers and/or memory to transform that electronic data into other electronic data that may be stored in registers and/or memory. The processing device 4002 may include one or more digital signal processors (DSPs), application-specific integrated circuits (ASICs), central processing units (CPUs), graphics processing units (GPUs), cryptoprocessors (specialized processors that execute cryptographic algorithms within hardware), server processors, or any other suitable processing devices.

The computing device 4000 may include a storage device 4004 (e.g., one or more storage devices). The storage device 4004 may include one or more memory devices such as random access memory (RAM) (e.g., static RAM (SRAM) devices, magnetic RAM (MRAM) devices, dynamic RAM (DRAM) devices, resistive RAM (RRAM) devices, or conductive-bridging RAM (CBRAM) devices), hard drive-based memory devices, solid-state memory devices, networked drives, cloud drives, or any combination of memory devices. In some embodiments, the storage device 4004 may include memory that shares a die with a processing device 4002. In such an embodiment, the memory may be used as cache memory and may include embedded dynamic random access memory (eDRAM) or spin transfer torque magnetic random access memory (STT-MRAM), for example. In some embodiments, the storage device 4004 may include non-transitory computer readable media having instructions thereon that, when executed by one or more processing devices (e.g., the processing device 4002), cause the computing device 4000 to perform any appropriate ones of or portions of the methods disclosed herein.

The computing device 4000 may include an interface device 4006 (e.g., one or more interface devices 4006). The interface device 4006 may include one or more communication chips, connectors, and/or other hardware and software to govern communications between the computing device 4000 and other computing devices. For example, the interface device 4006 may include circuitry for managing wireless communications for the transfer of data to and from the computing device 4000. The term "wireless" and its derivatives may be used to describe circuits, devices, systems, methods, techniques, communications channels, and the like., that may communicate data through the use of modulated electromagnetic radiation through a nonsolid medium. The term does not imply that the associated devices do not contain any wires, although in some embodiments they might not. Circuitry included in the interface device 4006 for managing wireless communications may implement any of a number of wireless standards or protocols, including but not limited to Institute for Electrical and Electronic Engineers (IEEE) standards including Wi-Fi (IEEE 802.11 family), IEEE 802.16 standards (e.g., IEEE 802.16-2005 Amendment), Long-Term Evolution (LTE) project along with any amendments, updates, and/or revisions (e.g., advanced LTE project, ultra-mobile broadband (UMB) project (also referred to as "3GPP2"), etc.). In some embodiments, circuitry included in the interface device 4006 for managing wireless communications may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. In some embodiments, circuitry included in the interface device 4006 for managing wireless communications may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). In some embodiments, circuitry included in the interface device 4006 for managing wireless communications may operate in accordance with Code Division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. In some embodiments, the interface device 4006 may include one or more antennas (e.g., one or more antenna arrays) to receipt and/or transmission of wireless communications.

In some embodiments, the interface device 4006 may include circuitry for managing wired communications, such as electrical, optical, or any other suitable communication protocols. For example, the interface device 4006 may include circuitry to support communications in accordance with Ethernet technologies. In some embodiments, the interface device 4006 may support both wireless and wired communication, and/or may support multiple wired communication protocols and/or multiple wireless communication protocols. For example, a first set of circuitry of the interface device 4006 may be dedicated to shorter-range wireless communications such as Wi-Fi or Bluetooth, and a second set of circuitry of the interface device 4006 may be dedicated to longer-range wireless communications such as global positioning system (GPS), EDGE, GPRS, CDMA, WiMAX, LTE, EV-DO, or others. In some embodiments, a first set of circuitry of the interface device 4006 may be dedicated to wireless communications, and a second set of circuitry of the interface device 4006 may be dedicated to wired communications.

The computing device 4000 may include battery/power circuitry 4008. The battery/power circuitry 4008 may include one or more energy storage devices (e.g., batteries or capacitors) and/or circuitry for coupling components of the computing device 4000 to an energy source separate from the computing device 4000 (e.g., AC line power).

The computing device 4000 may include a display device 4010 (e.g., multiple display devices). The display device 4010 may include any visual indicators, such as a heads-up display, a computer monitor, a projector, a touchscreen display, a liquid crystal display (LCD), a light-emitting diode display, or a flat panel display.

The computing device 4000 may include other input/output (I/O) devices 4012. The other I/O devices 4012 may include one or more audio output devices (e.g., speakers, headsets, earbuds, alarms, etc.), one or more audio input devices (e.g., microphones or microphone arrays), location devices (e.g., GPS devices in communication with a satellite-based system to receive a location of the computing device 4000, as known in the art), audio codecs, video codecs, printers, sensors (e.g., thermocouples or other temperature sensors, humidity sensors, pressure sensors, vibration sensors, accelerometers, gyroscopes, etc.), image capture devices such as cameras, keyboards, cursor control devices such as a mouse, a stylus, a trackball, or a touchpad, bar code readers, Quick Response (QR) code readers, or radio frequency identification (RFID) readers, for example.

The computing device 4000 may have any suitable form factor for its application and setting, such as a handheld or mobile computing device (e.g., a cell phone, a smart phone, a mobile internet device, a tablet computer, a laptop computer, a netbook computer, an ultrabook computer, a personal digital assistant (PDA), an ultra-mobile personal computer, etc.), a desktop computing device, or a server computing device or other networked computing component.

The following paragraphs provide various examples of the embodiments disclosed herein.

Example 1 is a method for ETL processing that is executed by a processing device. The method includes receiving, from a data catalog, field mapping between application data and a target schema; receiving, from an ETL processing queue, a signal comprising metadata and indicating that a record or a data file related to the application data is ready for processing; determining source data by processing the metadata to identify a location of the record or the data file and retrieving the record or the data file from the identified location; and providing source data to a Big Data table defined according to the target schema.

Example 2 includes the subject matter of Example 1, and further specifies that the field mapping is stored to the data catalog by an application or server.

Example 3 includes the subject matter of any of Examples 1 and 2, and further specifies that the application is configured to use the application data.

Example 4 includes the subject matter of any of Examples 1-3, and further specifies that the application is configured to register, when available, a new record or a new source data file with the data catalog.

Example 5 includes the subject matter of any of Examples 1-4, and further specifies that record or the data file were registered, with the data catalog, as ready for processing by the application.

Example 6 includes the subject matter of any of Examples 1-5, and further specifies that the record or the data file was aligned with the target schema by the data catalog.

Example 7 includes the subject matter of any of Examples 1-6, and further specifies that the signal is inserted into the ETL processing queue by the data catalog.

Example 8 includes the subject matter of any of Examples 1-7, and further specifies that the mapping is defined according to a type of the application data.

Example 9 includes the subject matter of any of Examples 1-8, and further specifies that the signal is inserted by the data catalog based on a type of the record or the data file matching the type of the application data.

Example 10 includes the subject matter of any of Examples 1-9, and further specifies that the target schema is deployed to a target Big Data table in the data catalog.

Example 11 includes the subject matter of any of Examples 1-10, and further specifies that the record or the data file is new or updated.

Example 12 includes the subject matter of any of Examples 1-11, and further specifies that the signal includes the location of the record or the data file.

Example 13 includes the subject matter of any of Examples 1-12, and further specifies that the data catalog provides the mapping between the application data and the target schema when the record or the data file is not associated with a previously provided schema.

Example 14 includes the subject matter of any of Examples 1-13, and further specifies that the source data is provided to the Big Data table using metadata provided by the data catalog.

Example 15 include the subject matter of any of Examples 1-14, and further specifies that the source data includes first source data and the target schema includes a first target schema, and that the method includes receiving, from the data catalog, a second field mapping between a second application data and a second target schema; receiving, from the ETL processing queue, a second signal comprising second metadata and indicating that a second record or a second data file related to the second application data is ready for processing; determining second source data by processing the second metadata to identify a second location of the second record or the second data file from the identified second location, where the first source data and the second source data have different formats; and providing second source data to the table defined according to the second target schema, where the first target schema and the second target schema are different schemas.

Example 16 include the subject matter of any of Examples 1-15, and further specifies that the source data includes first source data and the target schema includes a first target schema, and that the method includes receiving, from the data catalog, a second field mapping between a second application data and a second target schema; receiving, from the ETL processing queue, a second signal comprising second metadata and indicating that a second record or a second data file related to the second application data is ready for processing; determining second source data by processing the second metadata to identify a second location of the second record or the second data file from the identified second location, where the first source data and the second source data have different formats; and providing second source data to a second table defined according to the second target schema, where the first target schema and the second target schema are different schemas.

Example 17 is a system including non-transitory computer-readable storage media storing instructions and at least one electronic processor configured to execute the instructions to: receive, from a data catalog, a field mapping between application data and a target schema, receive, from an ETL processing queue, a signal comprising metadata and indicating that a record or a data file related to the application data is ready for processing, determine source data by processing the metadata to identify a location of the record or the data file and retrieving the record or the data file from the identified location, and provide source data to a table defined according to the target schema.

Example 18 includes the subject matter of Example 17, and further specifies that the field mapping is stored to the data catalog by an application or server.

Example 19 includes the subject matter of any of Examples 17 and 18, and further specifies that the application is configured to use the application data.

Example 20 includes the subject matter of any of Examples 17-19, and further specifies that the application is configured to register, when available, a new record or a new source data file with the data catalog.

Example 21 includes the subject matter of any of Examples 17-20, and further specifies that record or the data file were registered, with the data catalog, as ready for processing by the application.

Example 22 includes the subject matter of any of Examples 17-21, and further specifies that the record or the data file was aligned with the target schema by the data catalog.

Example 23 includes the subject matter of any of Examples 17-22, and further specifies that the signal is inserted into the ETL processing queue by the data catalog.

Example 24 includes the subject matter of any of Examples 17-23, and further specifies that the mapping is defined according to a type of the application data.

Example 25 includes the subject matter of any of Examples 17-24, and further specifies that the signal is inserted by the data catalog based on a type of the record or the data file matching the type of the application data.

Example 26 includes the subject matter of any of Examples 17-25, and further specifies that the target schema is deployed to a target Big Data table in the data catalog.

Example 27 includes the subject matter of any of Examples 17-26, and further specifies that the record or the data file is new or updated.

Example 28 includes the subject matter of any of Examples 17-27, and further specifies that the signal includes the location of the record or the data file.

Example 29 includes the subject matter of any of Examples 17-28, and further specifies that the data catalog provides the mapping between the application data and the target schema when the record or the data file is not associated with a previously provided schema.

Example 30 includes the subject matter of any of Examples 17-29, and further specifies that the source data is provided to the Big Data table using metadata provided by the data catalog.

Example 31 include the subject matter of any of Examples 1-14, and further specifies that the source data includes first source data and the target schema includes a first target schema, and that the at least one electronic processor is configured to execute the instructions to: receive, from the data catalog, a second field mapping between a second application data and a second target schema; receive, from the ETL processing queue, a second signal comprising second metadata and indicating that a second record or a second data file related to the second application data is ready for processing; determine second source data by processing the second metadata to identify a second location of the second record or the second data file from the identified second location, where the first source data and the second source data have different formats; and provide second source data to the table defined according to the second target schema, where the first target schema and the second target schema are different schemas.

Example 32 include the subject matter of any of Examples 1-14, and further specifies that the source data includes first source data and the target schema includes a first target schema, and that the at least one electronic processor is configured to execute the instructions to: receive, from the data catalog, a second field mapping between a second application data and a second target schema; receive, from the ETL processing queue, a second signal comprising second metadata and indicating that a second record or a second data file related to the second application data is ready for processing; determine second source data by processing the second metadata to identify a second location of the second record or the second data file from the identified second location, where the first source data and the second source data have different formats; and provide second source data to a second table defined according to the second target schema, where the first target schema and the second target schema are different schemas.

Example 33 is a non-transitory computer-readable storage medium including executable instructions, wherein the executable instructions cause an electronic processor to: receive, from a data catalog, a field mapping between application data and a target schema, receive, from an ETL processing queue, a signal comprising metadata and indicating that a record or a data file related to the application data is ready for processing, determine source data by processing the metadata to identify a location of the record or the data file and retrieving the record or the data file from the identified location, and provide source data to a table defined according to the target schema.

Example 34 includes the subject matter of Example 33, and further specifies that the field mapping is stored to the data catalog by an application or server.

Example 35 includes the subject matter of any of Examples 33 and 34, and further specifies that the application is configured to use the application data.

Example 36 includes the subject matter of any of Examples 33-35, and further specifies that the application is configured to register, when available, a new record or a new source data file with the data catalog.

Example 37 includes the subject matter of any of Examples 33-36, and further specifies that record or the data file were registered, with the data catalog, as ready for processing by the application.

Example 38 includes the subject matter of any of Examples 33-37, and further specifies that the record or the data file was aligned with the target schema by the data catalog.

Example 39 includes the subject matter of any of Examples 33-38, and further specifies that the signal is inserted into the ETL processing queue by the data catalog.

Example 40 includes the subject matter of any of Examples 33-39, and further specifies that the mapping is defined according to a type of the application data.

Example 41 includes the subject matter of any of Examples 33-40, and further specifies that the signal is inserted by the data catalog based on a type of the record or the data file matching the type of the application data.

Example 42 includes the subject matter of any of Examples 33-41, and further specifies that the target schema is deployed to a target Big Data table in the data catalog.

Example 43 includes the subject matter of any of Examples 33-42, and further specifies that the record or the data file is new or updated.

Example 44 includes the subject matter of any of Examples 33-43, and further specifies that the signal includes the location of the record or the data file.

Example 45 includes the subject matter of any of Examples 33-44, and further specifies that the data catalog provides the mapping between the application data and the target schema when the record or the data file is not associated with a previously provided schema.

Example 46 includes the subject matter of any of Examples 33-45, and further specifies that the source data is provided to the Big Data table using metadata provided by the data catalog.

Example 47 include the subject matter of any of Examples 1-14, and further specifies that the source data includes first source data and the target schema includes a first target schema, and that the executable instructions cause the electronic processor to: receive, from the data catalog, a second field mapping between a second application data and a second target schema; receive, from the ETL processing queue, a second signal comprising second metadata and indicating that a second record or a second data file related to the second application data is ready for processing; determine second source data by processing the second metadata to identify a second location of the second record or the second data file from the identified second location, where the first source data and the second source data have different formats; and provide second source data to the table defined according to the second target schema, where the first target schema and the second target schema are different schemas.

Example 48 include the subject matter of any of Examples 1-14, and further specifies that the source data includes first source data and the target schema includes a first target schema, and that the executable instructions cause the electronic process to: receive, from the data catalog, a second field mapping between a second application data and a second target schema; receive, from the ETL processing queue, a second signal comprising second metadata and indicating that a second record or a second data file related to the second application data is ready for processing; determine second source data by processing the second metadata to identify a second location of the second record or the second data file from the identified second location, where the first source data and the second source data have different formats; and provide second source data to a second table defined according to the second target schema, where the first target schema and the second target schema are different schemas.

## Claims

1. A method for extract, transform and load (ETL) processing executed by a processing device, the method comprising:
receiving, from a data catalog, a field mapping between application data and a target schema;
receiving, from an ETL processing queue, a signal comprising metadata and indicating that a record or a data file related to the application data is ready for processing;
determining source data by processing the metadata to identify a location of the record or the data file and retrieving the record or the data file from the identified location; and
providing source data to a table defined according to the target schema.

2. The method of claim 1, wherein the field mapping is stored to the data catalog by an application or server.

3. The method of claim 2, wherein the application is configured to use the application data.

4. The method of claim 2, wherein the application is configured to register, when available, a new record or a new source data file with the data catalog.

5. The method of claim 2, wherein the record or the data file were registered, with the data catalog, as ready for processing by the application.

6. The method of claim 5, wherein the record or the data file was aligned with the target schema by the data catalog.

7. The method of claim 5, wherein the signal is inserted into the ETL processing queue by the data catalog.

8. The method of claim 7, wherein the field mapping is defined according to a type of the application data.

9. The method of claim 8, wherein the signal is inserted by the data catalog based on a type of the record or the data file matching the type of the application data.

10. The method of claim 1, wherein the target schema is deployed to a target table in the data catalog.

11. The method of claim 1, wherein the record or the data file is new or updated.

12. The method of claim 1, wherein the signal includes the location of the record or the data file.

13. The method of claim 1, wherein the data catalog provides the field mapping between the application data and the target schema when the record or the data file is not associated with a previously provided schema.

14. The method of claim 1, wherein the source data is provided to the table using metadata provided by the data catalog.

15. The method of claim 1, wherein the source data comprises first source data and the target schema comprises a first target schema, and wherein the method further comprises:
receiving, from the data catalog, a second field mapping between a second application data and a second target schema;
receiving, from the ETL processing queue, a second signal comprising second metadata and indicating that a second record or a second data file related to the second application data is ready for processing;
determining second source data by processing the second metadata to identify a second location of the second record or the second data file from the identified second location, wherein the first source data and the second source data comprise different formats; and
providing second source data to the table defined according to the second target schema, wherein the first target schema and the second target schema are a same schema.

16. The method of claim 1, wherein the source data comprises first source data and the target schema comprises a first target schema, and wherein the method further comprises:
receiving, from the data catalog, a second field mapping between a second application data and a second target schema;
receiving, from the ETL processing queue, a second signal comprising second metadata and indicating that a second record or a second data file related to the second application data is ready for processing;
determining second source data by processing the second metadata to identify a second location of the second record or the second data file from the identified second location, wherein the first source data and the second source data comprise different formats; and
providing second source data to a second table defined according to the second target schema, wherein the first target schema and the second target schema are different schemas.

17. A non-transitory computer-readable storage medium comprising executable instructions, wherein the executable instructions cause an electronic processor to carry out the method steps of any one of claims 1-16.

18. A system comprising at least one electronic processor configured to execute the instructions of the non-transitory computer readable storage medium of claim 17.
